# EUROPEAN PATENT APPLICATION

(11) **EP 4 621 733 A1**
(43) Date of publication of application: **24.09.2025**
(21) Application number: 24315098.4
(22) Date of filing: 19.03.2024
(51) Int. Cl.: G06V 10/764, G06N 3/09, G06T 7/00, G06V 10/774, G06V 10/776, G06V 10/82

(54) **A METHOD OF AUGMENTING A TRAINING DATASET**

(71) Applicant: Check&Visit, 35000 Rennes (FR)
(72) Inventor: VAJOU, Quentin, Anglet (FR); YBANEZ ZEPEDA, José Alonso, Arceuil (FR); DUCHÊNE, Sylvain, Rennes (FR)
(74) Representative: Paustian & Partner Patentanwälte mbB

(57) **Abstract**

The invention relates to a computer-implemented method of augmenting a training dataset, comprising:
(a1) providing a pre-trained classification model, which is configured to classify images according to a predefined number of classes,
(a2) providing an initial training dataset of images, each image showing a physical object with a defect and being annotated with a respective classification label,
(c1) determining the model behaviour of the pre-trained classification model when feeding forward a first image through the pre-trained classification model using a predefined analysis module,
(d) augmenting the initial dataset as a function of the pre-trained classification model behaviour using a predefined data augmentation module.

## Description

### BACKGROUND

Monitoring an object or a scene of objects may have various technical purposes. For example, it may be desirable to detect and classify modifications or defects of the object(s) during use. Examples of an object may include a vehicle, a wall in a building, or furniture. Examples of a scene may include an indoor scene in a building or an interior of a vehicle.

In a particular example of monitoring real estate an inventory may be generated, also known as a property inventory or condition report, when entering or leaving a house or office. This report provides a detailed record of the property's condition, including its contents, fixtures, and overall state. It serves as a reference point for landlords, tenants, property managers, or real estate agents to document any changes or damages over time.

Conventionally, 2D (i.e. two dimensional) image data are obtained with a camera device, for example a smartphone. The 2D image data may comprise e.g. single 2D images of defects in an apartment. A user of the camera device may walk through the scene and take several images at least of the areas where the user finds a defect.

Algorithms are known which are configured to classify image data, e.g. in order to classify different defect types of a captured object. Defect classes of a wall may for example comprise different types of defects, such as a hole, a scratch or a spot. The algorithm may for example comprise an AI (artificial intelligence) based classifier model which is trained for the particular classification task.

However, a defect captured by e.g. a smartphone camera may be relatively small compared to the total image, e.g. in the form of a small hole, scratch or spot on a captured white wall. In particular, the image can show further features which are not related to the actual defect of interest, but e.g. to a piece of furniture in front of the wall, or to a boundary of the wall, such as a skirting board at its bottom.

In view of the above, there is a need to address such problems and associated disadvantages.

### SUMMARY OF THE DISCLOSURE

The present disclosure relates to a computer-implemented method of augmenting a training dataset, comprising:
(a1) providing a pre-trained classification model, which is configured to classify images according to a predefined number of classes,
(a2) providing an initial training dataset of images, each image showing a physical object with a defect and being annotated with a respective classification label,
(c1) determining the model behaviour of the pre-trained classification model when feeding forward a first image through the pre-trained classification model using a predefined (data) analysis module,
(d) augmenting the initial dataset as a function of the pre-trained classification model behaviour using a predefined data augmentation module.

By providing such a method, it becomes possible to analyse, i.e. investigate the model behavior and to augment, i.e. improve the initial training dataset based on the model behavior.

The initial training dataset (or another training dataset) may be used to initially train the classification model (e.g. by training from scratch or by fine-tuning a pre-trained model). The data analysis can thus allow to understand the effect of the training dataset on the model and in particular how the model converges during training. This can help to tweak and filter the dataset as well as adapt the training processing.

In particular, the data analysis may allow to deduce, what part of the signal in a training image is noise (preventing model convergence during training) and what part should desirably be focused on. The images of the initial training dataset may be augmented correspondingly.

Therefore, the purpose of the augmentation module may be to automatically refine and improve the set of images of the training dataset by focusing on and/or highlighting their most relevant sections, or by excluding other sections.

With this data augmentation technique, the quality and focus of the training dataset can be enhanced, making it more robust and precise for the training purpose, e.g. when the classification model is re-trained or fine-tuned using the augmented training dataset.

It is noted that "training" and "fine-tuning" are used interchangeably in the present disclosure. (Re-)straining a model using an augmented training dataset may namely be considered as fine-tuning. This model may namely be considered as being already trained (or fine-tuned) using the initial (i.e. not augmented) training dataset and then being fine-tuned using the augmented training dataset.

For example, the analysis module may determine based on the investigated model behavior that particular features shown on an image, which are not related to the shown defect, imply noise during training. Such feature may then be removed from the images of the training dataset by the augmentation module. In this context, it has been found that the model (after being fine-tuned using the augmented training dataset) not only becomes more accurate, but also becomes more robust to such features, i.e. is distracted less in inference time by such features. This is in particularly interesting, since the fine-tuned model did not see any such features in the augmented training dataset. Consequently, one might expect that the fine-tuned model would be distracted even more by such features in test images (what is actually not the case).

The first image may be an image of the initial training dataset. It may however also be any kind of image, include a white (blank) image. The selection of a suitable first image depends mainly on the used analysis module, as explained in more detail below.

A training dataset may be a dataset of images, for example 2D (i.e. two dimensional) images obtained with a camera device, for example a smartphone.

The dataset of 2D images may comprise single 2D images or a (video) stream of 2D image frames. A user may for example specifically take pictures of physical objects with defects, for example walls in an indoor scene. Also, a user of a camera device may walk through a scene, for example an indoor scene, and simultaneously take several images or a video of different parts of the scene.

The images may be taken in a scene comprising a plurality of objects, such as an indoor scene or an outdoor scene. An indoor scene may for example be the interior of a house, an apartment or a manufacturing hall. It is also possible, that an indoor scene may refer to the inside of a large truck or ship or vessel of a different kind. An outdoor scene may for example relate to the exterior of a vehicle.

A physical object may be a wall, the floor, or the ceiling of an indoor scene. A physical object may however also be a piece of furniture within an indoor scene or a piece of décor or the inner or outer surface of vehicle.

A defect may for example be a hole, crack or scratch on a wall of an interior scene, a dark spot on a wall of an indoor scene or further damages on the ground or the ceiling of an indoor scene.

A pre-trained classification model may refer to a machine learning model that has been pre-trained on a relatively large dataset to perform a specific task, such as classifying input data, in particular images of a dataset of 2d images, into different categories or classes. A machine learning model may generally refer to a model that can learn from data and improve its performance over time without being explicitly programmed for every task. These models may typically be trained on vast amounts of labeled data, e.g. images, to learn patterns and features that may be useful for the classification task.

A classification model may for example comprise a Convolutional Neural Network (CNN). A CNN may comprise multiple layers, including convolutional layers, pooling layers, and fully connected layers. Convolutional layers may be responsible for detecting patterns and features in the input images, while pooling layers may reduce spatial dimensions. Fully connected layers may perform classification based on the extracted features. This layer architecture allows CNNs to learn hierarchical representations of features in images, making them well-suited for tasks like image classification.

The term "pre-trained" may mean that the model may have already undergone a training process before being provided. A training process may usually involve tasks like e.g. image classification, text classification, or other forms of data categorization. Once trained, the model's parameters (e.g. weights and biases) may be stored, and the model may then be used as a starting point on a specific dataset or task, e.g. as a pre-trained model.

A predefined number of classes may be a specific count of categories that have been established in advance for classification purposes. This may comprise a fixed quantity of distinct groups into which data, e.g. image data, may be classified during a machine learning or data analysis process. Classified data may also be considered labelled data.

For example, the classification model may comprise an output layer, wherein each possible class is represented by a particular neuron of the output layer.

A class may for example comprise images comprising a certain kind of defect. Furthermore, different classes may be established for different kinds of defects. A class may also comprise images of physical objects without defect.

Providing an initial training dataset of images may be providing a dataset of 2D images for example 2D (i.e. two dimensional) images obtained with a camera device, for example a smartphone, of an indoor scene, e.g. an apartment. Each image being annotated with a respective classification label.

An annotation may refer to a specific class. Thus, each image may be linked to a specific class. An image may optionally be linked to multiple classes.

Determining the model behavior may refer to the process of analyzing how a model behaves or operates when presented with an image as input. Such a determination may involve examining how the model processes the image data, extracts features, and makes predictions or classifications based on the characteristics of the input image.

Determining the model behaviour may thus comprise for example methods with regards to feature extraction, e.g. extracting essential characteristics from the input image; convolutional operations e.g. applying filters to detect patterns within the image; pooling, e.g. downsampling feature maps to retain important information; a classification decision e.g. determining the class label for the input image based on extracted features including a probability estimation or in other words assigning confidence scores to predicted class labels. Furthermore, evaluation metrics may be calculated, e.g accuracy, precision, recall, and F1-score.

A predefined analysis module may refer to a module that has been predetermined for conducting analysis tasks. Such a module may be designed to perform particular functions or algorithms tailored to analyze data, e.g. images in a predefined manner. For example, a predefined analysis module may analyse the response of one or several neurons of the classification model, when an image is fed forward through the module (as also explained in more detail below).

A predefined data augmentation module may refer to a module that has been predetermined for augmenting images. Such a module may be designed to apply predefined transformations or modifications to input images to enhance the diversity and quality of the dataset used for training a classification model. For example, a predefined augmentation module may perform operations to one or multiple images such as rotation, flipping, cropping, or adjusting brightness and contrast.

Thus, augmenting the initial dataset as a function of the pre-trained classification model behaviour using a predefined data augmentation module may comprise leveraging insights from the model's behavior to enhance the training dataset. Generally speaking, it may be analyzed how the model performs on the existing dataset and subsequently, predefined augmentation module may be applied to generate additional or augmented training data that address the model's weaknesses or areas of uncertainty. One example of this may be, in a case where the model struggles with noise in a specific part of an image that does not contain a defect, the generation of an augmented image where the part comprising the noise has been cropped out of the image thus aiding the model learn to classify the defect in the image. By for example iteratively refining the dataset based on the model's behavior, an augmented dataset may be attained.

In general, a module may comprise a software tool or program and may thus comprise an algorithm and optionally a machine-learning model.

In one example, the method may comprise:
before the operation (c1) of determining the model behaviour, the method further comprises:
(b) initially finetuning the model using the initial dataset.

Initially finetuning the model using the initial dataset may comprise a process where the model's existing parameters are adjusted to better suit the characteristics of the initial dataset.

Initially, a pre-trained model, such as e.g. a convolutional neural network (CNN), may serve as a starting point. Then, the model's parameters, which have been learned from a large dataset during pre-training, may be updated using the images and corresponding labels from the initial dataset. This process allows the model to adapt to the specific features and patterns present in the new dataset without explicitly considering how the model performs on the data.

A model's parameters may refer to the weights and biases of its various layers, which have been learned during the initial training on a large dataset. Furthermore, a model's parameters may refer to e.g. batch size, gradient accumulation, class weighting, number of epochs.

Specific features and patterns of a dataset may for example comprise distinctive visual characteristics such as the presence of certain objects, textures, colors, or spatial arrangements that are relevant to the classification task. For instance, in a dataset of images of physical objects such as walls, specific features might include wall texture, defect shape, or the presence of certain backgrounds, while patterns could encompass recurring combinations of features unique to each defect category, such as length, color or width.

Fine-tuning may typically involve freezing some of the initial layers of a pre-trained model, e.g. those responsible for extracting low-level features like edges and textures, to prevent them from being drastically altered. The higher-level layers, which capture more abstract and task-specific features, are usually fine-tuned to better align with the dataset.

By fine-tuning the model's parameters on the initial dataset, the model becomes more tailored to the specific image classification task at hand, potentially leading to improved performance and generalization ability on that particular dataset.

The method may comprise:
after the operation (d) of augmenting the initial dataset, the method further comprises:
(e) finetuning the model using the augmented dataset.

For example, the parameters of the model, including weights and biases, may be adjusted iteratively using the images and corresponding labels from the augmented dataset.

This process aims to adapt the model's learned representations to better suit the characteristics of the augmented dataset, potentially enhancing its performance in image classification tasks.

The method may further comprise:
iterating operations (c) to (e), optionally until the augmented dataset converges.

Convergence of a dataset may refer to a state where the data augmentation module does not (or not significantly) modify the training dataset any more in further iterations.

In one example, the predefined analysis module may perform at least one of:
an activation maximization algorithm,
an occlusion sensitivity algorithm, and
a Grad-CAM (Gradient-weighted Class Activation Mapping) algorithm.

An Activation Maximization algorithm may refer to a technique used in the field of neural network interpretability, particularly in understanding how Convolutional Neural Networks (CNNs) make decisions. The main idea behind Activation Maximization is to find an input image that maximizes the activation of a particular neuron or a set of neurons in the network.

An occlusion sensitivity algorithm may refer to a technique used to understand the importance of different regions within an image for a model for making predictions. Typically, it may involve systematically occluding or covering parts of the image with a mask and observing the effect on the model's predictions. By analyzing how the model's confidence changes as different regions of the image are occluded, occlusion sensitivity helps identify which parts of the image are most influential in the classification decision.

Generally speaking, Occlusion Sensitivity may be particularly useful for identifying the focus areas of a model in image classification tasks. It may help in understanding whether a model is looking at the right features or if it's being influenced by irrelevant parts of an image. Typically, technique is easy to implement and does not require any modification to the model itself.

A Grad-CAM (Gradient-weighted Class Activation Mapping) algorithm may refer to a technique applied to visualize the regions of an image that contribute most to a model's prediction. It typically involves computing the gradients of the target class scores with respect to the feature maps of the last convolutional layer of a CNN. By weighting these feature maps with the gradient values, Grad-CAM generates a heatmap highlighting the important regions of the image for the model's decision.

Determining the model behaviour may comprise:
determining the activation behaviour of a neuron of the classification model during feed forward of an image, e.g. of a neuron of the output layer of the model.

The behavior of a neuron of the classification model may for example be determined for a specific neuron e.g. an output neuron corresponding to a particular class in a classification task or any neuron in one of the hidden layers of the CNN.

In a model that comprises a succession of, e.g. a Linear layer of classification, this may for example concern a neuron of the last layer. The last layer may for example contain a neuron for each predefined class.

Determining the activation behavior of a neuron may generally work as follows:
beginning with the input of an image in the input layer, a signal may propagate in the succession of layers where each neuron acts as a "gate" for the signal;
each neuron in the last layer receives part of the signal;
the way how the neurons of the last layer are activated (i.e. "are firing") may represent the predicted classification of the image, as each neuron of the output layer may represent a particular class.

The image may be an image of the initial training dataset, but may also be a white (blank) image. In order to investigate the behavior of a particular neuron, the data analysis module may interactively modify the image.

Determining the model behaviour may comprise:
iteratively feeding forward the first image, and
modifying the first image in each iteration as a function of an activation behaviour of a preselected neuron, such that the activation of the preselected neuron is maximized, e.g. using an Activation Maximization algorithm.

For example, for a specific neuron, in particular an output neuron corresponding to a particular class in a classification task, the process may be started with an initial image.

The first image may be an image of the initial training dataset, but may also be a white (blank) image. In order to investigate the behavior of a particular neuron, the data analysis module may interactively modify the image.

The initial image may be passed through the network in a forward pass to compute the activation value of the target neuron(s). The activation value represents how much the neuron is activated by the current image. The gradient of the target neuron's activation with respect to the input image may be computed. This gradient may give insights how to change the input image pixels to increase the activation of the target neuron.

The input image may then be updated by e.g. adjusting its pixels in the direction of the computed gradient. The update may usually be performed using gradient ascent to maximize the activation.

Steps of the process may be repeated iteratively. With each iteration, the input image may be refined to further increase the activation of the target neuron.

Typically, this may be carried out within for example an activation maximization algorithm.

Activation Maximization may for example be carried out as follows:,

Firstly, a specific neuron or a set of neurons within the network may be chosen. This could be an output neuron corresponding to a particular class in a classification task or any neuron in one of the hidden layers of the CNN.

A hidden layer of a CNN may be a layer that comprises neurons responsible for extracting and transforming features from the input image data. Such a layer may be situated between the input and output layers and may apply various operations, such as convolutions, pooling, and activation functions.

Then, the process may be started with an initial first image. This first image can be random noise, a blank image, or any arbitrary image. Such an image may help ensure that the optimization process starts from a neutral point and does not bias the exploration towards any particular feature. The choice of the initial image can influence the optimization process.

The initial image may be passed through the network in a forward pass to compute the activation value of the target neuron(s). A forward pass may be the process where input data is fed into a neural network, and computations are performed layer by layer until an output is generated. The activation value represents how much the neuron is activated by the current image.

Subsequently, the gradient of the target neuron's activation with respect to the input image may be computed. This gradient may give insights how to change the input image pixels to increase the activation of the target neuron.

The input image may then be updated by adjusting its pixels in the direction of the computed gradient. The update may usually be performed using gradient ascent (as opposed to gradient descent used in training) because the goal is to maximize, not minimize, the activation.

Some steps may be repeated iteratively. With each iteration, the input image may be refined to further increase the activation of the target neuron.

Multiple regularization techniques may be applied. These may include e.g. L2 norm regularization, total variation regularization (to encourage spatial smoothness), and clipping values to maintain valid pixel ranges.

After a number of iterations or once a certain activation threshold is reached, the process may be stopped. The final image may be an optimized image that maximally activates the target neuron. Such an image may give insights into what features or patterns the neuron is looking for.

In other words, Activation Maximization may help in understanding what features a neural network is paying attention to and what each part of the network has learned to detect. It may be particularly useful in visualizing and interpreting the internal workings of complex CNNs.

Determining the model behaviour may comprise:
iteratively feeding forward the first image, the first image comprising in each iteration a changed occlusion patch, and
determining a sensitivity map of the model as a function of a model response to the first image, e.g. using an occlusion sensitivity algorithm.

Typically, this may be carried out within an occlusion sensitivity algorithm.

The first image may be an image of the initial training dataset, but may also be an image of another dataset.

An occlusion sensitivity algorithm may for example be carried out as follows:
The algorithm may start with a specific input image and a trained CNN model trained to perform a task such as image classification.

Subsequently, a portion of the input image is systematically occluded (covered or blocked out) with a patch. This patch may typically be a square of a fixed size, and it may be a black box, a gray box, or the mean color of the image.

Then said patch may be slid across the entire image in a systematic manner, covering different parts of the image in each step. At each position of the patch, the rest of the image remains unchanged.

For each occluded version of the image (i.e., for each position of the patch), the image may be fed into the model, and a prediction may be made. It may then be observed how the predictions change when different parts of the image are occluded.

By comparing the model's predictions for the occluded images with the prediction for the original, non-occluded image, it may be possible to determine which parts of the image are most important for the model's decision. If occluding a certain area significantly changes the prediction, it may imply that this area was crucial for the model's decision.

Lastly, the changes in prediction confidence may be recorded and visualized in the form of a heat map or sensitivity map. This map highlights areas that are critical for the model's decision-making process. Brighter or hotter areas on the map may indicate regions where occlusion has a greater impact on the model's output.

Determining the model behaviour may comprise:
determining a heatmap for a first image fed forward through the model using a gradient-weighted Class Activation Mapping algorithm, the heatmap highlighting regions in the image which are more relevant for predicting the target class than other regions in the image, and
superimposing the heatmap on the first image.

A Grad-CAM algorithm may for example be carried out as follows:
Grad-CAM may be applied to Convolutional Neural Networks (CNN) beginning for example with performing a forward pass of an image through the CNN to obtain the raw prediction scores for each class.

Subsequently, a layer of the CNN must be selected. Typically, the last convolutional layer of the network is chosen because it provides the most comprehensive combination of high-level features and spatial information.

After the forward pass, the gradients of the target class (the class for which visualization is wanted) may be computed with respect to the feature maps of the selected convolutional layer. This step may be done using backpropagation.

Backpropagation may refer to the process of computing gradients of the loss function with respect to the model's parameters, which allows for updating the parameters during training to minimize the loss and improve classification performance.

Gradients for each feature map may be globally averaged, resulting in a single value for each feature map. These values are subsequently utilized to measure the importance of each feature map with respect to the target class.

The computed gradients may then be used to weight the feature maps of the selected convolutional layer thus highlighting the features that are most important for the target class.

The weighted feature maps may then be combined and passed through a ReLU function, a ReLU function may be an activation function used in neural networks, which introduces non-linearity by returning the input value if it is positive and zero otherwise, aiding in feature learning and model optimization.

Thus, only those features may be retained that have a positive influence on the target class. The result may be a heatmap that highlights the important regions in the image for predicting the target class.

The heatmap may be resized to match the dimensions of the original input image and is superimposed on it.

Such a visual representation may show the areas of the image that were pivotal in the network's decision-making process for the specific class.

The determined model behavior may be represented by the modified first image, the sensitivity map and/or the first image with the superimposed heatmap.

These data representations may represent the model behavior and may be used to augment the dataset. These representations may in particular be used to determine a set of rules, as explained in the following.

The method may further comprise:
(c2) determining a set of rules for augmenting the images of the initial dataset based on the determined model behavior using the analysis module, wherein the initial dataset is augmented based on the set of rules.

A rule may for example contain information regarding the weighting of different regions of an image based on the model behaviour of the pre-trained classification model when feeding forward an image.

A rule may be based for example on a heatmap that shows the areas of the image that were pivotal in the network's decision-making process for the specific class.

A rule may for example be based on the activation value of a target neuron.

The set of rules may be determined based on the above-mentioned representations.

The set of rules may define types of image regions and/or types of image content which affect model convergence during training.

For example, a rule may define a region that does not affect model convergence. Similarly, a rule may define a region that does affect model convergence and/or that highly affects image conversion.

A rule may thus define a region that may optimize model convergence during training.

For example, a region that highly affects model convergence may be a region that that maximally activates a target neuron.

The types of image regions may comprise peripheral image regions, and/or
the types image content may comprise a predefined geometric feature, such as a ridge or an edge.

An image may for example be an image of a wall of an indoor scene, such as e.g. the interior of a house, an apartment, or a manufacturing hall. A physical object shown by such an image may thus be a wall, the floor, or the ceiling of an indoor scene.

An image may for example comprise a wall with a defect, e.g. a crack.

A peripheral image region may thus for example be the region of the wall encompassing the defect. In other words, a peripheral image region may be the wall besides the crack.

A predefined geometric feature may for example be a ridge or an edge. In an example where the image comprises a wall with a defect, a predefinded geometrical feature may for example be the edge of a window frame, a corner of the wall or the corner between floor and wall.

The initial dataset may be augmented by:
maintaining those regions in the images of the initial dataset, which are determined to optimize model convergence during training, and/or
by removing other areas, which are determined to deteriorate model convergence during training.

Regions of an image that are not essential to classification may thus be cut out of the image to enhance e.g. the accuracy and reliability of image classification.

This process may involve removing irrelevant background elements or extraneous details that do not contribute to the classification task.

Removing such regions may reduce the complexity of the classification task. A model may thus focus its computational resources on extracting features and patterns that are directly related to the target classes.

This may lead to more accurate and reliable classification results, as the model may better discern the distinguishing characteristics of the objects or entities being classified without being distracted by unnecessary information. Additionally, by focusing on relevant regions, the model may be better equipped to generalize its learned representations to new, unseen data, improving its overall performance and robustness.

A predefined data augmentation module may comprise at least one of:
a cropping algorithm configured to crop the region of interest in the image,
a dataset duplication algorithm (for duplication the initial training dataset), and
an image centering algorithm configured to center the image on the region of interest.

A cropping algorithm may refer to a method to select and extract a region of interest from an input image. Such an algorithm may typically involve determining the most relevant region of the image based on predefined criteria, such as the presence of objects or features relevant to the classification task. Once identified, the algorithm may crop the image to comprise only the selected region, discarding other regions of the image comprising e.g. extraneous background or surrounding context.

This process may aide focus the model's computational resources on the most informative regions of the image, potentially improving classification accuracy and efficiency.

A dataset duplication algorithm may refer to a method to augment a dataset by creating a new set of augmented images without the deletion of existing images, ensuring the initial images remain unchanged and accessible for training.

An image centering algorithm may refer to a method to adjust the position of objects and/or regions within an image to a central location. Such an algorithm may involve analyzing the regions of an image which are ideal to optimize model convergence during training and may apply a translation to the image, shifting these regions to a more central position.

Such a translation may ensure that such regions are properly aligned and centered within the image, which may improve the performance of image classification models by providing a consistent and standardized input format.

The cropping algorithm may comprise at least one of an image erosion algorithm and a contour detection algorithm.

An erosion algorithm may refer to a morphological operation used to shrink or erode the boundaries of objects in an image, in the present case e.g. of an erosion mask. It may comprise for example applying a structuring element to each pixel in the image and determining whether the pixel should be preserved or removed based on the arrangement of neighboring pixels.

This process can aid in successively removing peripheral features or noise from an image. It is thereby assumed that the defect of interest (i.e. the defect of the object) is located somewhere in the center of the image (and may thus desirably remain in the image, meanwhile features in the periphery have been fully eroded).

A contour detection algorithm may refer to a process used to identify a the eroded boundaries of objects in an image, in the present case e.g. the contour of the erosion mask. It generally involves detecting changes in pixel intensity or color gradients along the edges of objects, which may indicate the presence of boundaries.

Various techniques, such as edge detection algorithms like a Suzuki-Abe algorithm (e.g. of OpenCV), a Sobel algorithm or a Canny algorithm may be employed in the contour detection algorithm to identify these transitions and outline the shapes of objects in the image.

Augmenting the initial dataset may comprise (and/or cropping an image of the training dataset may comprise) for at least one image of the dataset:
iteratively eroding an erosion mask using a (e.g. square-shaped) kernel (using e.g. the cropping algorithm, in particular the erosion algorithm of the cropping algorithm) until the erosion mask (in particular a contour of the erosion mask) is a polygon with exactly four vertices (i.e. points or corners), i.e. in a last iteration. The image may be cropped by cutting a square within (the contour of) the erosion mask of the last iteration, optionally such that the erosion mask of the last iteration and/or the square retains the image center and removes peripheral image areas.

The contour of the cropping mask may be detected by the contour detection algorithm of the cropping algorithm.

The segments of the (closed) polygonal chain may be called its edges or sides. The points where two edges meet may be the polygon's vertices or corners. The polygon may be in particular a simple polygon which does not intersect itself.

The cropping algorithm is hence configured to crop or cut a square out of the image. The cropped square may thus also be referred to as a cropping mask.

The cropped square may be placed in the erosion mask of the last iteration, such that it covers the erosion mask as much as possible. In other words, the square size may be maximized without protruding out of the erosion mask of the last iteration.

The square may be in particular a rectangle, i.e. with two equal-length adjacent sides. It is possible but not necessary that the square has four sides of equal length and four equal angles (90-degree angles).

In this manner the largest possible square can be obtained and thus the most image information retained and at the same time any peripheral image areas can be excluded due to the erosion technique. At the same time, as the cropped image has a square form, it may be easily upscaled to the initial image size, as described below.

A cropping mask may refer to an image mask that specifies which regions of an input image should be retained and which are discarded during the cropping process.

Such a cropping mask may e.g. comprise pixels set to 1 for regions to be kept and 0 for regions to be removed. When applied to an input image, the cropping mask may selectively preserve the relevant regions of the image while excluding irrelevant regions e.g. background or peripheral image features.

A cropping mask may be focused and resized, adapting to the specific requirements of the image.

A square kernel may refer to a convolutional filter that comprises a square-shaped matrix of weights. Also other shapes than a square may be possible. Such a kernel may be applied to the input image to compute convolutions, typically by sliding the kernel over the image in both horizontal and vertical directions.

Erosion may be considered a morphological operation that removes pixels on object boundaries in an image, effectively shrinking the mask in each iteration.

Thus, the largest square containing the center of the image may be found iteratively. Ridges that bring noise to the signal may be removed iteratively eroding the mask with a square kernel.

After each erosion iteration applied by the erosion algorithm to the erosion mask, the contour detection algorithm may detect a contour of the erosion mask. For example, the erosion may be reiterated (i.e. repeated), in case the detected contour is a polygon with more than four vertices.

A contour within the eroded mask may be used to identify shapes in images and can aid in finding for example square-like shapes.

The contour detection algorithm may be e.g. an edge detection algorithm. This algorithm may scan the image for places where the intensity changes sharply, what is typically indicative for edges. After the erosion mask has been eroded in an erosion iteration, the contour in the eroded erosion mask is determined by the contour detection algorithm.

The contour detection algorithm may output a contour (i.e. a line of the contour) which may be characterized multiple vertices or corners, i.e. points (i.e. multiple points coordinates ordered). If this line has more than 4 vertices/corners/points (which means the shape is not a square) then the iterative processing may be continued by a subsequent erosion iteration and subsequent contour detection.

The peripheral image areas may contain a predefined geometric feature as image content, such as at least one edge or ridge, and the erosion mask may be iteratively eroded until the geometric feature is removed from the image.

A geometric feature such as an edge or a ridge, may be for example the corner of a wall, a baseboard or skirting board or a door frame.

Such a geometric feature may be detected and iteratively eroded or, in other words, excluded from the image in order to enhance the classification results concerning the defect contained in the image.

In particular, the stop condition for the iterative process of iteratively eroding and contour detection (as explained above) may be when a single contour is detected which comprises less than 5 vertices or corners, i.e. points.

This stop condition ensures that while the algorithm excludes smaller or fragmented areas (which might be ridges or noise), it retains the largest contiguous square possible within the mask. This approach thus balances between finding a significant square and avoiding inclusion of minor, irrelevant features.

The cropped image (i.e. the cut square) of the last erosion iteration may be scaled up to the original image size of the image of the initial dataset.

By scaling up the cropped image of the last erosion it may be ensured that output of the process is proportional to the input. Accordingly, the images of the augmented training dataset may be used to finetune the classification model, without any need to adapt the input layer of the model.

The present disclosure further relates to a computer-implemented method of augmenting a training dataset, comprising:
(a2) providing an initial training dataset of images, each image showing a physical object with a defect and being optionally annotated with a respective classification label,
(d) augmenting the initial dataset by iteratively eroding an erosion mask using a (e.g. square-shaped) kernel (using e.g. a cropping algorithm, in particular an erosion algorithm of the cropping algorithm) until the erosion mask (in particular a contour of the erosion mask) is a polygon with exactly four vertices (i.e. points or corners) in a last iteration. The image may be cropped by cutting a square within (the contour of) the erosion mask of the last iteration, optionally such that the erosion mask of the last iteration and/or the square retains the image center and removes peripheral image areas.

Said method may comprise further features, as explained above, e.g. re. the iterative process of eroding the image.

The cropping algorithm may comprise at least one of an image erosion algorithm and a contour detection algorithm.

After each erosion iteration applied e.g. by an erosion algorithm to the erosion mask, the contour detection algorithm may detect a contour of the erosion mask, wherein the erosion is reiterated, in case the detected contour is a polygon with more than four vertices.

A contour within the eroded mask may be used to identify shapes in images and can aid in finding for example square-like shapes.

The peripheral image areas may contain a predefined geometric feature as image content, such as at least one edge or ridge, and the erosion mask may be iteratively eroded until the geometric feature is removed from the image.

The cropped image of the last erosion iteration may be scaled up to the original image size of the image of the initial dataset.

The present disclosure relates to further optional aspects, as explained below.

The present disclosure may further relate to a computer-implemented method of training and/or finetuning a classification model to classify a defect on a physical object, comprising a method according to any one of the aspects, as explained above.

The method may further comprise:
a preprocessing step, the preprocessing step comprises at least one of:
parameter initialization, setting up metadata and connections, model selection,
setting up data loaders, or setting up optimization,
a training step, the training step comprising at least one of:
   training cycles, performance logging, or model storage.

The present disclosure may further relate to a computer-implemented method of identifying a defect on a physical object, comprising:
providing an image depicting the physical object,
providing a trained and/or finetuned classification model as described above, and
classifying the image using the machine learning model.

The method may further comprise:
ranking the probabilities of the defect types, and
optionally providing the ranked probabilities to a user and/or a mobile device.

The method may further comprise:
creating a report based on the probabilities of the defect types, and
optionally providing the report to a user and/or a mobile device.

Providing an image depicting the physical object may comprise capturing a photo by a user and/or a mobile device and determining an image based on the photo.

The image may comprise at least one of:
a geotag related to the location of the physical object,
a viewing angle,
6D-pose information, or
a depthmap.

The present disclosure may further relate to a data processing system comprising means for carrying out the method according to any one of the preceding methods.

The data processing system may comprise at least one processor or processing unit.

The processor (or processing unit) may be a component of electronic devices that may be responsible for carrying out computational tasks. There may be different types of processing units, each designed for specific purposes. A processing unit may be or may comprise a Central Processing Unit (CPU), Graphics Processing Unit (GPU), Digital Signal Processor (DSP), Field-Programmable Gate Array (FPGA), and/or Application-Specific Integrated Circuit (ASIC). The CPU may be the primary processing unit in a computer that may be responsible for executing most of the instructions and calculations required by the computer. GPUs may be specialized processing units that may be designed to handle the complex calculations required for rendering graphics and video. DSPs may be specialized processing units that may handle signal processing tasks, while FPGAs may be reconfigurable processing units that may be programmed to perform various computational tasks. ASICs may be customized processing units designed to perform a specific set of tasks, optionally making them highly efficient and effective for their intended purpose. The method according to the present disclosure may also run on a virtual server.

The data processing system may also comprise or be connectable with a camera device, e.g. a smartphone, as described above.

The present disclosure may further relate to a computer program comprising instructions which, when the program is executed by a computer, cause the computer to carry out the method according to any one of the preceding methods.

The present disclosure may further relate to a computer-readable medium comprising instructions which, when executed by a computer, cause the computer to carry out the method according to any one of the preceding methods.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 schematically shows an example of a computer-implemented method of augmenting a training dataset according to embodiments of the present disclosure.
Fig. 2A, Fig. 2B and Fig.2C show a schematic example of incrementally eroded erosion mask for augmenting an image of a training dataset according to embodiments of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

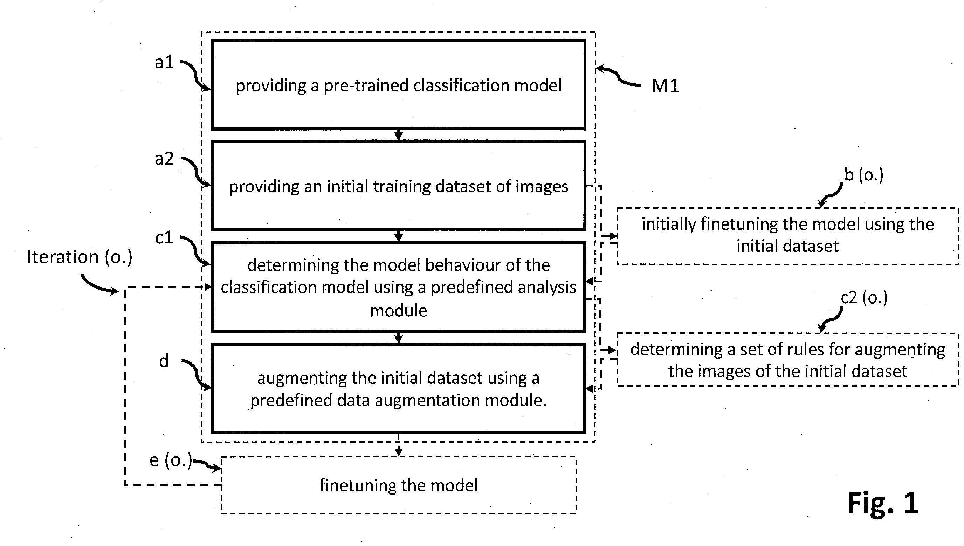

Fig. 1 schematically shows an example of a computer-implemented method of augmenting a training dataset according to embodiments of the present disclosure.

In step a1 of the method M1 shown in Fig .1 a pre-trained classification model is provided, which is configured to classify images according to a predefined number of classes. A classification model may for example comprise a Convolutional Neural Network (CNN). The term "pre-trained" may mean that the model may have already undergone a training process before being provided.

In step a2, an initial training dataset of images is provided a2, wherein each image shows a physical object with a defect and may be annotated with a respective classification label. The dataset of 2D images may comprise single 2D images or a (video) stream of 2D image frames. A physical object may for example be a wall, the floor, or the ceiling of an indoor scene. A defect may for example be a crack in a wall of an interior scene, a dark spot in a wall of an indoor scene or further damages on the ground or the ceiling of an indoor scene.

A predefined number of classes may be a specific count of categories that have been established in advance for classification purposes. In the context of the example shown in Fig. 1, a class may for example comprise images comprising a certain kind of defect. Furthermore, different classes may be established for different kinds of defects. A class may also comprise images of physical objects without defect.

In step c1, the model behaviour of the pre-trained classification model is determined when feeding forward a first image through the pre-trained classification model using a predefined analysis module.

Such a determination may involve examining how the model processes the image data, extracts features, and makes predictions or classifications based on the characteristics of the input image. Determining the model behaviour may thus comprise for example methods with regards to feature extraction, e.g. extracting essential characteristics from the input image; convolutional operations e.g. applying filters to detect patterns within the image; pooling, e.g. downsampling feature maps to retain important information; a classification decision e.g. determining the class label for the input image based on extracted features including a probability estimation or in other words assigning confidence scores to predicted class labels. Furthermore, evaluation metrics may be calculated, e.g accuracy, precision, recall, and F1-score.

For example, the predefined analysis module may perform one or multiple of an activation maximization algorithm, an occlusion sensitivity algorithm, and a Grad-CAM (Gradient-weighted Class Activation Mapping) algorithm.

In between the second and the third step, there may optionally be a step b for initially finetuning the model using the initial dataset. Initially finetuning the models using the initial dataset may comprise a process where the model's existing parameters are adjusted to better suit the characteristics of the initial dataset. The model's parameters, which have been learned from a large dataset during pre-training, may be updated using the images and corresponding labels from the initial dataset. This process allows the model to adapt to the specific features and patterns present in the new dataset without explicitly considering how the model performs on the data. Fine-tuning may typically involve freezing some of the initial layers of a pre-trained model, e.g. those responsible for extracting low-level features like edges and textures, to prevent them from being drastically altered.

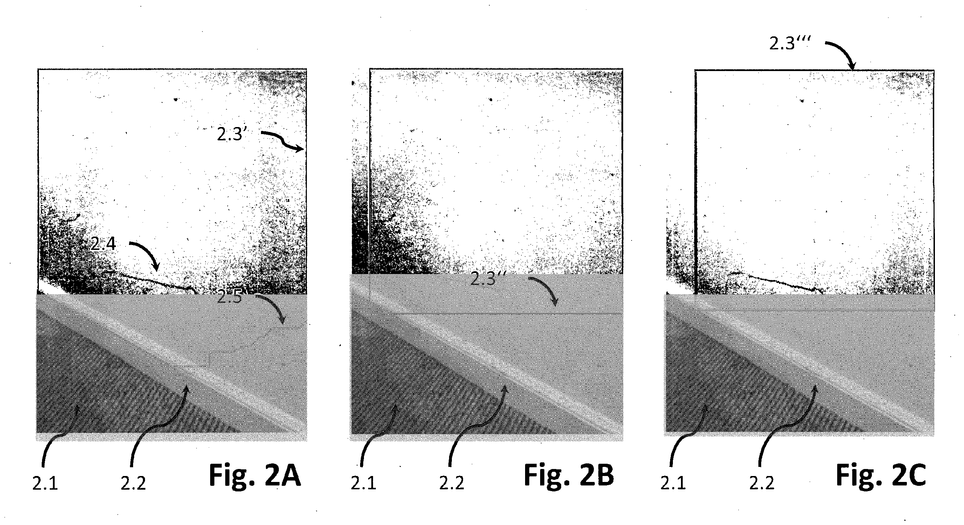

A fourth step d of the method M1 comprises augmenting the initial dataset as a function of the pre-trained classification model behaviour using a predefined data augmentation module. A predefined data augmentation module may refer to a module that is configured to augment images. Such a module may be designed to apply predefined transformations or modifications to input images to enhance the diversity and quality of the dataset used for training a classification model. For example, a predefined augmentation module may, referring to images as dataset, include operations to one or multiple images such as rotation, flipping, cropping, or adjusting brightness and contrast. An example of a data augmentation module and its function is described in context of fig. 2.

In between determining the model behavior (c1) and augmenting the initial dataset (d), an optional step c2 of determining a set of rules may be carried out for augmenting the images of the initial dataset based on the determined model behavior using the analysis module, wherein the initial dataset is augmented based on the set of rules. In other words, the set of rules may be the output of the data analysis module of step c and may be used as input to configure the data augmentation module of step d. A rule may for example contain information regarding the weighting of different regions of an image based on the model behaviour of the pre-trained classification model when feeding forward an image. A rule may be based for example on a heatmap that shows the areas of the image that were pivotal in the network's decision-making process for the specific class. The set of rules may also comprise configuration parameters for the data augmentation module, and/or may comprise an algorithm which is to be carried out by the data augmentation module to augment the images of the training dataset.

After augmenting (d), an optional finetuning (e) of the model using the augmented dataset may be carried out. For example, the parameters of the model, including weights and biases, may be adjusted iteratively using the images and corresponding labels from the augmented dataset.

The steps c1, c2, d and e may optionally be iterated multiple times until the training data augmentation converges, i.e. the images of the training dataset do not (or not significantly) change anymore.

Fig. 2A, Fig. 2B and Fig.2C show a schematic example of incrementally eroded erosion mask for augmenting an image of a training dataset according to embodiments of the present disclosure. The shown interactive process may for example be implemented as a computer-implemented method of augmenting a training dataset.

The computer-implemented method of augmenting a training dataset may comprise:
(a2) providing an initial training dataset of images, each image showing a physical object with a defect and being optionally annotated with a respective classification label, and
(d) augmenting the initial dataset by iteratively eroding an erosion mask using e.g. a square kernel (and using e.g. an erosion algorithm) until a contour of the erosion mask is a polygon with exactly four vertices (points or corners; i.e. the polygon is defined by exactly four points or corners) in a last iteration, wherein the image may cropped by cutting a square within the contour of the erosion mask of the last iteration, optionally such that the erosion mask of the last iteration and/or the square retains the image center and removes peripheral image areas.

The underlying goal of the augmentation method is to identify the most significant regions of an image and then crop a square out of said image to highlight these areas. Thus, any peripheral regions which contain distracting image features are removed, ensuring the classification model will learn during training to focus on the actual defect (which is to be classified).

Peripheral regions may mean any regions which are beyond the image center. However, the peripheral regions do need to be at the edge of the image (i.e. at an image border) but they can also be within the image.

Distracting image features may be any image content (e.g. in fig. 2A to 2B the carpet 2.1 and the skirting 2.2) which is not related to the defect of interest and which may thus imply noise at model training.

The example image of fig. 2A to 2C shows a wall having a defect of interest 2.4, in this particular example a scratch or mark. The data augmentation module of the present disclosure may be configured to modify this image such that it only contains the wall with this defect 2.4 but excludes other image features, such as the carpet 2.1 and the skirting 2.2. In this example it is assumed that the defect is substantially in an image center, i.e. it is expected that a user taking an image of the defect will focus on this defect. Accordingly, other, distracting image features are expected to be rather in a peripheral image region.

For this purpose of data augmentation, the data augmentation module, in particular its cropping algorithm, may comprise an image erosion algorithm and a contour detection algorithm performing a method of erosion and contour detection, in order find the largest square containing a center region of the image and thus the defect 2.4. Thus, ridges that bring noise to the image, e.g. the carpet 2.1 and the skirting 2.2 in the figures 2A, 2B and 2C, are removed from the image.

The cropping algorithm may be configured to set an initial erosion mask (i.e. of iteration 0) in the image (cf. e.g. erosion mask 2.3'). For example, the erosion mask may be focused and resized, adapting to the specific requirements of the image and task. In the example of fig, 2A, the initial erosion mask 2.3' may be obtained by drawing a polygon shaped box covering the image center. For example, the contour of initial erosion mask may be maximized starting from the image center, and mechanisms like that one of the contour detection algorithm (i.e. detecting changes in pixel intensity or color gradients along the edges of objects, which may indicate the presence of boundaries) may be used to determine a boundary (i.e. the contour) of the initial erosion mask. In case no boundaries are detected, as e.g. on the upper part of the image of fig. 2A, the initial erosion mask may hence be maximized until it reaches the edge of the image. In another example, the initial erosion mask may cover the complete image. In still another example, the initial erosion mask may have any predefined form, e.g. of a square lying in the image, and optionally covering the image center.

The contour detection algorithm may be configured to determine a contour of the (possibly already eroded) erosion mask 2.3', 2.3", 2.3"'. Accordingly, the contour detection algorithm may output a contour (i.e. sequence of point coordinates). Then the cropping algorithm (or generally the computer implemented method) checks whether the contour has exactly or at most 4 vertices. If this condition is fulfilled, the cropping algorithm (or generally the computer implemented method) cuts a square in the contour (as described in more detail below).

The contour detection algorithm may for example involve detecting changes in pixel intensity or color gradients along the edges of objects, which may indicate the presence of boundaries. The contour detection algorithm may also be referred to as an edge detection algorithm which scans the image for places where the intensity changes sharply, i.e. being indicative of edges. However, also other forms of contour detection algorithms are possible.

A contour may be a line. This line may be defined by a series of coordinates, i.e. points.

In the example of fig. 2A and 2B, the contour of the erosion mask 2.3' and 2.3" is a polygon having more than four points, i.e. vertices or corners. In the example of fig. 2C, the contour of the erosion mask 2.3‴ a rectangle having exactly four points, i.e. corners. As described below, this shape of a rectangle is the stop condition of the cropping algorithm (i.e. the last iteration).

The image erosion algorithm erodes the erosion mask 2.3' in an iteration n with a square kernel. A square kernel may refer to a convolutional filter that comprises a square-shaped matrix of weights. Such a kernel may be applied to the input image to compute convolutions, typically by sliding the kernel over the image, in particular along the contour of the erosion mask.

Erosion refers to a morphological operation that may remove pixels on object boundaries in an image, effectively shrinking the erosion mask 2.3 in each iteration. Each of the figures 2A, 2B and 2C may represent the result of a different iteration (cf. eroded erosion masks 2.3", 2.3‴).

In particular, the erosion algorithm may compute the minimal convoluted value of the pixel under an anchor, i.e. the pixel in the center of the kernel. This means the algorithm takes the minimal value of all pixels "under" the kernel and applies this value to the anchor. The result is an erosion of the lighter spaces of the image. Since a square kernel may be used the algorithm tends to iteratively split the image with spaces of a square like shape until the contour has only 4 points (i.e. corners) i.e. the contour is a perfect square.

As shown in the example of fig. 2A to 2C, there may be irregularities on the white wall which cause the erosion algorithm to move the contour line. However, the difference in intensities can be so small that only small erosions are caused at each iteration. This effect gives the impression of jitter of the contour line in the area 2.5 (i.e. contour 2.3' in the form of a relatively complex polygon).

After the erosion of iteration n, the contour detection algorithm identifies a contour. This contour may be e.g. a polygon having more than 4 points (in particular in the beginning of the iterative process, cf. fig. 2A and 2B)..

Hence, the cropping algorithm may perform several iterations to successively erode the erosion mask. In particular, if the contour line has more than 4 vertices/corners/points (which means the shape is not a polygon with an easily computable solution for determining a rectangle square within the erosion mask, cf. e.g. contours of erosion masks 2.3' and 2.3") then the iterative processing may be continued.

The iterative erosion is continued until after the last iteration the polygon has exactly 4 points (i.e. a four-points-polygon, cf. fig. 2C). In other words, when the contour has 4 points, a polygon is obtained within which a square can be cut. In contrast, if the polygon has more than 4 points (cf. fig. 2A and 2B), no solution is easily computable, how a square could be cut. For this reason, the erosion is reiterated, until a contour of 4 points is obtained.

It is noted that the 4 points of the polygon do not need to be necessarily arranged to define a perfect square (as it is shown in the example of fig. 2C) but may be arranged in any relation to each other, e.g. to define an uneven square or a trapezoid.

As a result, the largest square (cf. fig. 2C) within the polygon can be computed which may be:
polygon_coords[:, :, 0].min(), ,
polygon_coords[:, :, 0].max(),
polygon_coords[:, :, 1].min(),
polygon_coords[:, :, 1].max()

This technique for image augmentation has the advantage to be computationally inexpensive and thus fast.

As mentioned, the stop condition for the iterative process may be when a single contour is detected which comprises less than 5 corners, i.e. points (cf. erosion mask 2.3‴).

This stop condition ensures that while the algorithm excludes smaller or fragmented areas (which might be ridges or noise), it retains the largest contiguous square possible within the mask. This approach thus balances between finding a significant square and avoiding inclusion of minor, irrelevant features.

The cropped image (cf. content of erosion mask 2.3‴ which already has a square form) may be scaled up to the original image size of the image of the initial dataset. By scaling up the cropped image of the last erosion it may be ensured that output of the process is proportional to the input. Accordingly, the images of the augmented training dataset may be used to finetune the classification model, without any need to adapt the input layer of the model.

The data augmentation module may be able to process multiple images simultaneously, ensuring a swift completion even for large datasets. Furthermore, it may create a new set of augmented images instead of modifying the initial images, thus ensuring the original images remain unchanged and accessible for training.

Furthermore, an exemplary data augmentation module may be adaptable in order to guide the modules focus, either centering the erosion mask or letting the module decide the ideal focus region based on the image's content.

In more detail, the algorithm illustrated in figures 2A, 2B and 2C may comprise the following process steps:
erosion mask 2.3 manipulation: the erosion mask 2.3 may be focused and
resized, adapting to the specific requirements of the image and task.
Boundary Definition: a rectangle boundary may be drawn on the resized erosion mask 2.3, aiding in defining the region of interest.
Erosion: The erosion mask 2.3 is iteratively eroded with a square kernel, removes pixels on object boundaries in an image, effectively shrinking the erosion mask 2.3 in each iteration.
Contour Detection: after each erosion iteration, contours within the eroded erosion mask 2.3 are detected. Contours are used to identify shapes in images, and in this case, they help in finding square-like shapes.
Size and Scale Adjustment: lastly, the detected square may be scaled up as per the original size of the erosion mask 2.3, ensuring the output is proportional to the initial input.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

The terms "record" and "receive" may be used synonymously throughout this disclosure unless denoted differently.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A computer-implemented method of augmenting a training dataset, comprising:
(a1) providing a pre-trained classification model, which is configured to classify images according to a predefined number of classes,
(a2) providing an initial training dataset of images, each image showing a physical object with a defect and being annotated with a respective classification label,
(c1) determining the model behaviour of the classification model when feeding forward a first image through the classification model using a predefined analysis module,
(d) augmenting the initial dataset as a function of the model behaviour using a predefined data augmentation module.

2. The method according to claim 1, wherein
before the operation (c1) of determining the model behaviour, the method further comprises:
(b) initially finetuning the model using the initial dataset.

3. The method according to claim 1 or 2, wherein
after the operation (d) of augmenting the initial dataset, the method further comprises:
(e) finetuning the model using the augmented dataset.

4. The method according to any one of the preceding claims, wherein
the method further comprises:
iterating operations (c) to (e), optionally until the augmented dataset converges.

5. The method according to any one of the preceding claims, wherein
the predefined analysis module performs at least one of:
an activation maximization algorithm,
an occlusion sensitivity algorithm, and
a Grad-CAM (Gradient-weighted Class Activation Mapping) algorithm.

6. The method according to any one of the preceding claims, wherein determining the model behaviour comprises: determining the activation behaviour of a neuron of the classification model during feed forward of an image.

7. The method according to any one of the preceding claims, wherein determining the model behaviour comprises:
iteratively feeding forward the first image, and
modifying the first image in each iteration as a function of an activation behaviour of a preselected neuron, such that the activation of the preselected neuron is maximized.

8. The method according to any one of the preceding claims, wherein determining the model behaviour comprises:
iteratively feeding forward the first image, the first image comprising in each iteration a changed occlusion patch, and
determining a sensitivity map of the model as a function of a model response to the first image.

9. The method according to any one of the preceding claims, wherein determining the model behaviour comprises:
determining a heatmap for a first image fed forward through the model using a gradient-weighted Class Activation Mapping algorithm, the heatmap highlighting regions in the image which are more relevant for predicting the target class than other regions in the image, and
superimposing the heatmap on the first image.

10. The method according to any one of the preceding claims, wherein
the determined model behavior is represented by the modified first image, the sensitivity map and/or the first image with the superimposed heatmap.

11. The method according to any one of the preceding claims, further comprising:
(c2) determining a set of rules for augmenting the images of the initial dataset based on the determined model behavior using the analysis module, wherein
the initial dataset is augmented based on the set of rules.

12. The method according to the preceding claim, wherein
the set of rules defines types of image regions and/or types of image content which affect model convergence during training.

13. The method according to the preceding claim, wherein
the types of image regions comprise peripheral image regions, and/or
the types image content comprise a predefined geometric feature, such as a ridge or an edge.

14. The method according to any one of the preceding claims, wherein
the initial dataset is augmented by:
maintaining those regions in the images of the initial dataset, which are determined to optimize model convergence during training, and/or
by removing other areas, which are determined to deteriorate model convergence during training.

15. The method according to any one of the preceding claims, wherein
the predefined data augmentation module comprises at least one of:
a cropping algorithm configured to crop the region of interest in the image,
a dataset duplication algorithm, and
an image centering algorithm configured to center the image on the region of interest.

16. The method according to any one of the preceding claims, wherein
the cropping algorithm comprises at least one of an image erosion algorithm and a contour detection algorithm.

17. The method according to any one of the preceding claims, wherein augmenting the initial dataset comprises for at least one image of the dataset:
iteratively eroding an erosion mask using a square kernel until the erosion mask is a polygon with exactly four vertices in a last iteration, wherein the image is cropped by cutting a square within the erosion mask of the last iteration.

18. The method according to any one of the preceding claims, wherein
after each erosion iteration applied by the erosion algorithm to the erosion mask, the contour detection algorithm detects a contour of the erosion mask, wherein the erosion is reiterated, in case the detected contour is a polygon with more than four vertices.

19. The method according to any one of the preceding claims, wherein
the peripheral image areas contain a predefined geometric feature as image content, such as at least one edge or ridge, and the erosion mask is iteratively eroded until the geometric feature is removed from the image.

20. The method according to any one of the preceding claims, wherein
the cropped image is scaled up to the original image size of the image of the initial dataset.

21. A computer-implemented method of augmenting a training dataset, comprising:
(a2) providing an initial training dataset of images, each image showing a physical object with a defect and being optionally annotated with a respective classification label,
(d) augmenting the initial dataset by iteratively eroding an erosion mask until the erosion mask is a polygon with exactly four vertices in a last iteration, wherein after a last erosion iteration the image is cropped by cutting a square within the erosion mask of the last iteration .
